# FASCICULE DE BREVET EUROPEEN

(11) **EP 1 207 178 B1**
(45) Date de publication et mention de la délivrance du brevet: **31.07.2013**
(21) Numéro de dépôt: 01402903.7
(22) Date de dépôt: 13.11.2001
(51) Int. Cl.: C08J 11/06, B65D 19/00, C08L 67/02

(54) **Pièce en matériau thermoplastique recyclé, procédé de fabrication correspondant et palette comprenant au moins un profilé de ce type**
Formmasse aus regeneriertem thermoplastischen Material, Verfahren zu seiner Herstellung und Palette, mindestens ein Profil aus diesem Material enthaltend
Moulding from recycled thermoplastic material, process for its preparation and pallet comprising at least a profile of this type

(30) Priorité: 16.11.2000 FR 0014783
(43) Date de publication de la demande: 22.05.2002
(73) Titulaire: Cybele Environnement, 94100 Saint -Maur (FR); Dumouchel, Catherine, 94100 Saint-Maur (FR)
(72) Inventeur: Dumouchel, Catherine, 94100 Saint-Maur (FR)
(74) Mandataire: Lavialle, Bruno François Stéphane

(56) Documents cités:
- EP-A- 0 666 285
- WO-A-91/08263
- JP-A- 2000 129 099
- US-A- 4 778 842
- US-A- 5 405 567
- US-A- 5 527 585
- US-A- 5 951 940
- US-A- 5 965 655

## Description

La présente invention concerne des produits en matériau thermoplastique recyclé et un procédé de fabrication de ceux-ci.

L'écologie prenant une part prépondérante dans notre société, les acteurs industriels et les consommateurs ont été conduits à maîtriser l'impact de leur activité et de leur comportement sur l'environnement afin d'éviter des pollutions ou dégradations de celui-ci.

L'un des principaux problèmes lié à cette préoccupation concerne la part croissante prise par les matériaux thermoplastiques dans la réalisation des produits de grande consommation et par voie de conséquence l'élimination des déchets contenant de tels matériaux. En effet, ces matériaux ne sont pas rapidement biodégradables de sorte que la simple mise en décharge de tels déchets ne constitue pas une solution satisfaisante d'un point de vue écologique. Il est ainsi connu des documents JP-2000 129099, US 4 778 842 et US 5 965 655, une composition pour la réalisation de produits en matériaux synthétiques.

Pour éliminer ces déchets, il a été recouru à l'incinération qui permet l'élimination physique des déchets et évite leur stockage. Toutefois, cette incinération produit des fumées qui réchauffent et polluent l'atmosphère.

Une solution à ce problème est de recycler ces produits. Les compositions figurant dans les trois documents ci-dessus ne font pas intervenir de matériaux thermoplastiques recyclés. L'aptitude au recyclage des matériaux thermoplastiques dépend notamment de leurs caractéristiques physico-chimiques. Les matériaux thermoplastiques présentant une bonne aptitude au recyclage sont généralement broyés et nettoyés pour être utilisés dans le cycle de fabrication d'un grand nombre de nouveaux produits en étant incorporés dans le matériau destiné à constituer ceux-ci. Les matériaux thermoplastique dont l'aptitude au recyclage est faible sont d'une manière générale simplement broyés pour être utilisés comme matériaux de remplissage ou de remblaiement, ou sont éventuellement incorporés dans des matériaux destinés à constituer des produits de qualité médiocre présentant de faibles caractéristiques mécaniques.

Le polyéthylène téréphtalate vierge est un matériau fréquemment utilisé dans la fabrication de produits à large diffusion telle que des bouteilles ou des articles de consommation courante (voir par exemple le document WO-A-91/08263). Le polyéthylène téréphtalate recyclé, en particulier celui provenant des ordures ménagères, présente souvent un caractère hétérogène et des caractéristiques physico-chimiques de niveau relativement faible qui cantonnent son utilisation à la fabrication de produits de faible épaisseur et de qualité médiocre, dans le matériau desquels il est incorporé en petite quantité. Compte tenu des volumes de produits réalisés en polyéthylène téréphtalate vierge et de la difficulté du recyclage de ce matériau, le recyclage de la totalité du polyéthylène téréphtalate produit est en pratique impossible actuellement. Ceci est amplifié par le fait que le polyéthylène téréphtalate recyclé, tout comme le polyéthylène téréphtalate vierge de qualité courante, ne peut être utilisé pour la réalisation de pièces massives. Il en résulte que la quantité de polyéthylène téréphtalate qu'il est possible de recycler dans des produits est limitée.

Des tentatives de recyclage ont ainsi été envisagées dans le document US-A-5 405 567, mais les quantités de polyéthèlène téréphtalate restent relativement faibles.

D'autres compositions sont également connus des documents EP 666 285 et US 5 951 940.

Il serait donc intéressant de pouvoir obtenir des pièces massives incorporant du polyéthylène téréphtalate recyclé tout en ayant de bonnes caractéristiques mécaniques.

A cet effet, on prévoit, selon l'invention, une pièce en matériau thermoplastique, caractérisé en ce que le matériau comprend sensiblement, en poids :
- entre 49 % et 63,5 % de polyéthylène téréphtalate recyclé,

- entre 27 % et 36 % et de préférence 33 % de polyéthylène haute densité recyclé,
- entre 4 % et 6 % et de préférence 5 % d'agent compatibilisant,
- entre 5 % et 10 % et de préférence 7 % de charge de renfort.

Il est ainsi obtenu une pièce qui peut avoir une structure massive. Cette pièce présente en outre des caractéristiques mécaniques satisfaisantes qui, dans la composition préférée, se rapprochent de celles du bois notamment en ce qui concerne la résistance à la rupture et confère à la pièce des possibilités d'assemblage similaires à celles du bois.

L'invention a également pour objet un procédé de fabrication d'une pièce du type précédent formant un profilé, qui comprend les étapes de :
- sécher des paillettes de polyéthylène téréphtalate recyclé,
- introduire dans une extrudeuse ces paillettes de polyéthylène téréphtalate, des paillettes de polyéthylène haute densité recyclé, l'agent compatibilisant et la charge de renfort pour obtenir un mélange pâteux,
- et introduire le mélange pâteux dans un moule disposé directement à la sortie de l'extrudeuse.

Le séchage des paillettes de polyéthylène téréphtalate permet d'éviter une hydrolyse du polyéthylène téréphtalate lors de l'extrusion. On s'est en effet aperçu qu'une telle hydrolyse provoque directement une diminution de la résistance aux chocs du polyéthylène téréphtalate.

Avantageusement le procédé comprend l'étape ultérieure de refroidissement du mélange contenu dans le moule.

Le refroidissement du mélange contenu dans le moule immédiatement après l'intrusion du mélange pâteux dans le moule permet d'obtenir un profilé présentant une couche superficielle dans une phase amorphe plus souple. Ceci améliore les propriétés mécaniques du matériau et notamment sa résistance aux chocs.

L'invention a aussi pour objet une palette de transport comprenant des éléments de support parallèles ayant des portions d'extrémité fixées par des moyens d'assemblage à des éléments transversaux de liaison reposant sur des équerres et l'un au moins de ces éléments est constitué par une poutre présentant l'une des caractéristiques précitées.

La palette ainsi constituée peut être réalisée par assemblage des différents éléments et présente des propriétés du même ordre que celles des palettes classiques et notamment celles en bois, voire supérieures à celles des palettes réalisée en matériau thermoplastique injecté du type courant.

Avantageusement, au moins un des éléments transversaux est formé d'une poutre de section transversale en C ayant une aile supérieure sur laquelle sont fixés les éléments support, une âme et une aile inférieure lesquelles sont évidées par au moins une échancrure pour former de chaque côté de celle-ci deux équerres espacées et en une seule pièce avec l'élément transversal. Le profil en C de la poutre permet une bonne répartition du poids supporté par la palette, apportant ainsi une amélioration à la résistance de celle-ci. En outre, par l'utilisation d'une telle poutre, on forme en un seul tenant les différentes parties de l'assemblage classique, ce qui permet de diminuer le nombre de pièces et de simplifier la fabrication de la palette.

Selon un mode de réalisation particulier, la palette comprend au moins un élément de rigidification s'étendant parallèlement aux éléments support à distance de ceux-ci entre deux équerres opposées, l'élément de rigidification étant formé par une poutre en forme de planche, la surface inférieure de cette poutre étant rainurée et cette dernière comprenant au moins un chanfrein ménagé sur au moins un de ses bords longitudinaux supérieurs. La palette est ainsi particulièrement résistante. Ceci permet en outre d'une part d'alléger la palette et d'autre part de limiter le risque d'un choc entre l'élément de rigidification et l'extrémité des fourches.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

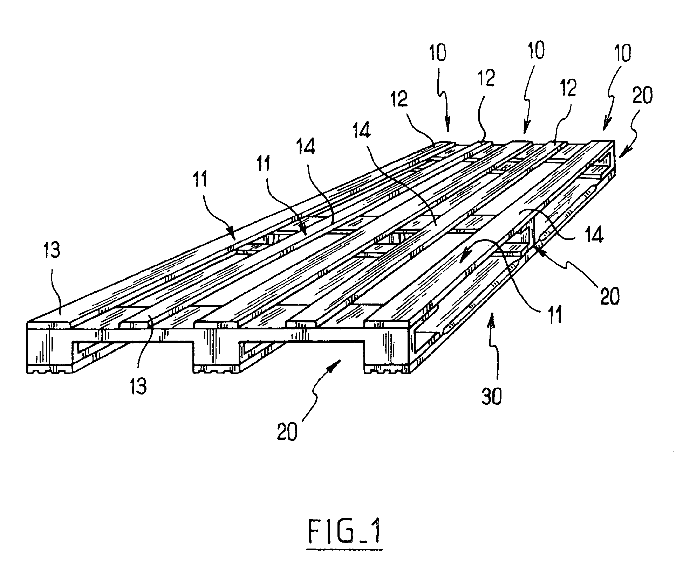

- la figure 1 est une vue en perspective d'une palette conforme à l'invention,

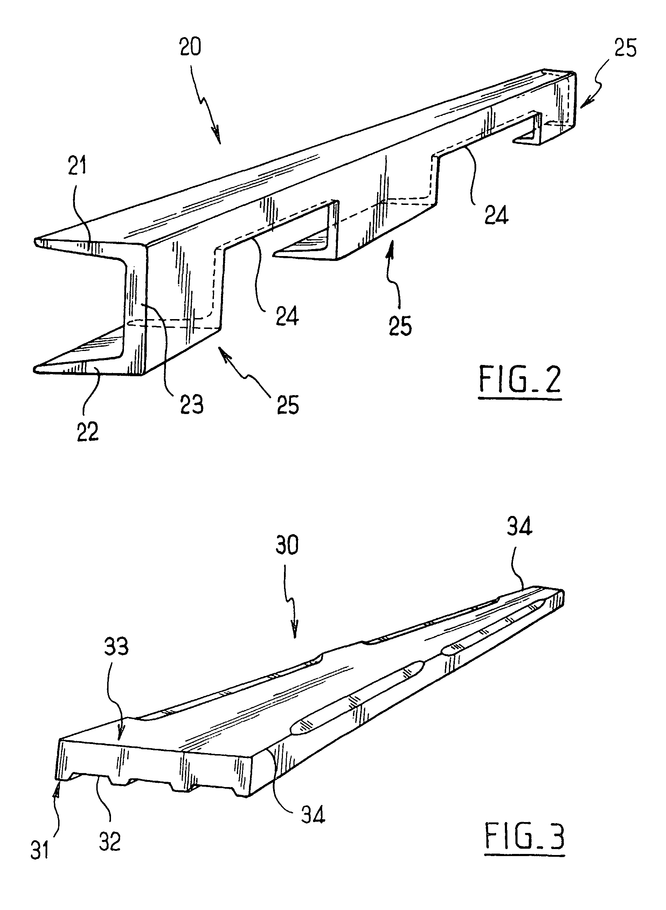

- la figure 2 est une vue en perspective d'un premier type de poutre conforme à l'invention,
- la figure 3 est une vue en perspective d'un deuxième type de poutre conforme à l'invention.

En référence aux figures, les profilés généralement désignés en 10, 20, 30 conformes à l'invention sont réalisés à partir d'un matériau thermoplastique qui comprend sensiblement en poids :
- 55 % de polyéthylène téréphtalate recyclé,
- 33 % de polyéthylène haute densité recyclé,
- 5 % d'un agent compatibilisant, et
- 7 % d'une charge de renfort.

La composition du matériau thermoplastique peut varier mais les proportions en poids des différents composants sont de préférence sensiblement comprises entre :
- 49 % et 63,5 % pour le polyéthylène téréphtalate,
- 27 % et 36 % pour le polyéthylène haute densité,
- 4 % et 6 % pour l'agent compatibilisant,
- 5 % et 10 % pour la charge de renfort.

L'adjonction de polyéthylène haute densité permet d'obtenir un matériau qui a un caractère amorphe plus important que si seul du polyéthylène téréphtalate (qui est très cristallin) était utilisé. Ceci améliore la résistance mécanique du matériau obtenu.

L'agent compatibilisant est ici celui référencé LOTADER AX8900 de la société ELF ATOCHEM qui est utilisé pour assurer l'homogénéisation du mélange du polyéthylène téréphtalate recyclé et du polyéthylène haute densité recyclé. D'autres agents compatibilisants ayant des propriétés comparables peuvent bien entendu être utilisés.

La charge de renfort peut être formée de microbilles de verre telles que celles produite sous la référence 050-20-215 par la société SOVITEC.

La charge de renfort utilisée peut en outre être formée de fibres de verre telles que celles produites sous la référence 3540 par la société PPG. Ces fibres, qui ont une longueur de 3 mm, améliorent le module d'Young et la résistance aux chocs.

La charge de renfort peut également être formée d'écailles de verre du type produit sous la référence MICROGLAS par la société NGF EUROPE. Ces écailles permettent l'obtention d'un accroissement du module d'Young et une augmentation de l'allongement qui s'accompagne par une augmentation de la résistance aux chocs. En outre, l'utilisation d'écailles de verre permet de limiter l'augmentation de la viscosité du mélange due à l'introduction desdites écailles dans celui-ci par rapport à l'introduction de fibres. Les écailles ont de plus vraisemblablement d'une part une influence sur la cristallinité et d'autre part une influence sur le retrait telle qu'elles limitent la formation de microfissures.

D'autres charges de renfort peuvent être employées seules ou en combinaison. Un mélange de microbilles de verre et/ou de fibres de verre et/ou d'écailles de verre est ainsi utilisable.

D'autres types de charges peuvent bien entendu être ajoutés au mélange. Parmi ces charges, on peut utiliser un émulsifiant comme du carbonate de zinc. Ceci permet de créer des bulles dans le matériau et permet de diminuer la masse des profilés fabriqués avec celui-ci. Des pigments peuvent également être ajoutés pour colorer le matériau.

Les profilés 10, 20, 30 sont réalisés par extrusion-moulage ou extrusion-intrusion.

Le polyéthylène téréphtalate recyclé et le polyéthylène haute densité recyclé utilisés sont de préférence sous forme de paillettes obtenues par broyage de déchets en polyéthylène téréphtalate et de déchets en polyéthylène haute densité et lavage des paillettes obtenues. On pourrait également utiliser des granulés de ces matériaux mais cela nécessite des opérations supplémentaires (mélange des paillettes de chaque matériau à des charges, extrusion de ces mélanges, refroidissement puis broyage en granulés).

Les paillettes de polyéthylène téréphtalate sont dans un premier temps séchées par exemple dans un dessiccateur afin d'éviter qu'une hydrolyse du polyéthylène téréphtalate intervienne lors de l'extrusion ultérieure de celui-ci. Le polyéthylène haute densité peut également être séché.

Les paillettes de polyéthylène téréphtalate et de polyéthylène haute densité, l'agent compatibilisant et les charges de renfort sont ensuite mélangés et introduits dans la trémie d'alimentation d'une extrudeuse. Il est important de s'assurer que la descente des paillettes dans la trémie est régulière.

La température du corps de chauffe de l'extrudeuse est ici de l'ordre de 250° du côté de la trémie et de 275° du côté de la sortie de l'extrudeuse. Afin d'assurer un mélange correct des différents composants du matériau thermoplastique, la durée de séjour de celui-ci dans l'extrudeuse est de préférence compris entre une et quelques minutes. Le temps de séjour de la matière dans l'extrudeuse est déterminé notamment par la longueur de la vis de l'extrudeuse, le pas de celle-ci et sa vitesse de rotation.

A la sortie de l'extrudeuse, on obtient un mélange pâteux qui est directement introduit dans un moule dont la forme correspond a la poutre à réaliser (l'extrudeuse débouche directement dans celui-ci par un orifice ménagé dans la paroi du moule). On notera que si la forme intérieure du moule est complexe, il sera peut-être nécessaire de réaliser plusieurs orifices d'injection de la matière. La pression de l'injection de la matière dans le moule est procurée par l'effort de poussée exercée sur le mélange par la vis de l'extrudeuse. Dans le cas où un émulsifiant a été ajouté à la matière, une partie de la pression d'injection sera fournie par l'émulsification. Dans un tel cas, le temps de séjour de la matière dans l'extrudeuse sera de préférence calculé de manière que l'émulsification ait lieu dans l'extrudeuse et non dans le moule (car dans ce dernier cas, la quantité de matière à introduire dans le moule est plus difficile à déterminer).

Une fois le moule rempli, le moule est plongé dans un bain d'eau froide, par exemple à une température inférieure ou égale à 20°C. Ceci permet d'obtenir une poutre qui présente une couche superficielle relativement épaisse en phase amorphe qui est relativement souple et résiste relativement bien aux chocs. D'autres modes de refroidissement sont bien évidemment utilisables et notamment le trempage des pièces elles-mêmes dans un bain ou le maintien des pièces ou des moules contenant celles-ci dans un flux de gaz froid.

La palette conforme à l'invention peut être réalisée en tout matériau thermoplastique par assemblage des différents éléments la constituant. La palette ici décrite est réalisée dans le matériau thermoplastique précité.

La palette comprend des éléments supports 10 sous forme de planches ayant une surface supérieure 11 rugueuse. Les éléments supports 10 sont fixés au niveau de leurs extrémités opposées 12, 13 et de leur portion médiane 14 sur des poutres de liaison 20 transversales.

Les poutres de liaison 20 de section transversale en C présentent une aile supérieure 21 et une aile inférieure 22 reliée par une âme 23. Les éléments supports 10 sont fixés sur l'aile supérieure 21.

Deux évidements 24 espacés l'un de l'autre échancrent à la fois l'aile inférieure 22 et l'âme 23 pour former un passage pour les fourches d'un chariot de manutention de palettes de type classique. Il est ainsi délimité pour chaque profilé de liaison trois équerres généralement désignées en 25 et reliées par l'aile supérieure 21. On notera ici que chaque évidement 24 est réalisé dans une partie inférieure de l'âme 23 de telle manière qu'une partie restante de l'âme 23 s'étend au-dessus de l'évidement entre les équerres. D'autres agencements des évidements sont possibles.

Les portions d'ailes inférieures 22 en regard appartenant aux trois poutres de liaison sont reliées par trois éléments de rigidification 30 qui s'étendent parallèlement aux éléments supports 10. Les pièces de rigidification 30 ont une forme de planche et comportent une surface inférieure 31 présentant des rainures longitudinales 32 et une surface supérieure 33 sur laquelle sont fixées les ailes inférieures 22 des pièces de liaison 20. Les bords longitudinaux supérieurs 34 des éléments de rigidification 30 sont chanfreinés. Les extrémités des fourches des chariots de manutention sont généralement biseautées dans leur partie inférieure de sorte qu'en coopérant avec ces parties biseautées, les chanfreins forment des rampes guidant les extrémités des fourches au-dessus des éléments 30. Le risque d'un choc entre ces éléments 30 et les fourches est ainsi limité. Ceci permet en outre d'alléger ces éléments de rigidification.

L'assemblage des différents éléments constituant la palette est réalisé par vissage, par clouage, par collage ou par soudage ou par combinaison de ces moyens. On notera que la palette conforme à l'invention est particulièrement bien adaptée à un assemblage par clouage.

Bien entendu, l'invention n'est pas limitée au mode de réalisation décrit et on peut y apporter des variantes de réalisation sans sortir du cadre de l'invention tel que défini par les revendications.

D'autres applications peuvent en particulier être envisagées pour les pièces conformes à l'invention.

## Revendications

1. Pièce en matériau thermoplastique, **caractérisé en ce que** le matériau comprend sensiblement, en poids :
- entre 49 % et 63,5 % de polyéthylène téréphtalate recyclé,
- entre 27 % et 36 % de polyéthylène haute densité recyclé,
- entre 4 % et 6 % d'agent compatibilisant,
- entre 5 % et 10 % de charge de renfort.

2. Pièce selon la revendication 1, **caractérisé en ce que** le matériau thermoplastique comprend sensiblement, en poids :
- 55 % de polyéthylène téréphtalate,
- 33 % de polyéthylène haute densité,
- 5 % d'agent compatibilisant,
- 7 % de charge de renfort.

3. Pièce selon la revendication 1 ou la revendication 2, **caractérisé en ce que** la charge de renfort comprend des écailles de verre.

4. Pièce selon la revendication 1 ou la revendication 2, **caractérisé en ce que** la charge de renfort comprend des fibres de verre.

5. Pièce selon la revendication 1 ou la revendication 2, **caractérisé en ce que** la charge de renfort comprend des microbilles de verre.

6. Procédé de fabrication d'un profilé conforme à l'une quelconque des revendications précédentes, **caractérisé en ce qu'**il comprend les étapes de :
- sécher des paillettes de polyéthylène téréphtalate recyclé,
- introduire dans une extrudeuse ces paillettes de polyéthylène téréphtalate, des paillettes de polyéthylène haute densité recyclé, l'agent compatibilisant et la charge de renfort pour obtenir un mélange pâteux,
- et introduire le mélange pâteux dans un moule disposé directement à la sortie de l'extrudeuse.

7. Procédé selon la revendication 6, **caractérisé en ce qu'**il comprend l'étape ultérieure de refroidissement du mélange contenu dans le moule.

8. Palette de transport, **caractérisée en ce qu'**elle comprend des éléments de support (10) parallèles ayant des portions d'extrémité (12, 13) fixées par des moyens d'assemblage à des poutres transversales de liaison (20) reposant sur des équerres (25) et **en ce que** l'un au moins de ces éléments/poutres est constitué par une pièce conforme à l'une des revendications 1 à 5.

9. Palette selon la revendication 8, **caractérisée en ce qu'**au moins une des poutres transversales comporte une section transversale en C ayant une aile supérieure (21) sur laquelle sont fixés les éléments support, une âme (23) et une aile inférieure (22) les deux évidées par au moins une échancrure (24) pour former de chaque côté de celle-ci deux équerres (25) espacés et en une seule pièce avec l'aile supérieure (21).

10. Palette selon la revendication 8 ou la revendication 9, **caractérisée en ce qu'**elle comprend au moins un élément de rigidification (30) s'étendant parallèlement aux éléments support (10) à distance de ceux-ci entre deux équerres (25) opposées, l'élément de rigidification étant en forme de planche.

11. Palette selon la revendication 10, **caractérisée en ce que** la surface inférieure (31) de l'élément en forme de planche est rainurée.

12. Palette selon la revendication 10 ou la revendication 11, **caractérisée en ce que** l'élément de rigidification comprend au moins un chanfrein ménagé sur au moins un de ses bords longitudinaux supérieurs (34).

## Patentansprüche

1. Bauteil aus thermoplastischem Material, **dadurch gekennzeichnet, dass** das Material im Wesentlichen nach Gewicht enthält:
- zwischen 49 % und 63,5 % recyceltes Polyethylenterephtalat,
- zwischen 27 % und 36 % recyceltes Polyethylen mit hoher Dichte,
- zwischen 4 % und 6 % eines kompatibilisierenden Agens,
- zwischen 5 % und 10 % eines Verstärkungsfüllstoffes.

2. Bauteil nach Anspruch 1, **dadurch gekennzeichnet, dass** der thermoplastische Werkstoff im Wesentlichen nach Gewicht enthält:
- 55 % Polytethylenterephtalat,
- 33 % Polyethylene hoher Dichte
- 5 % eines kompatibilisierenden Agens
- 7 % eines Verstärkungsfüllstoffes.

3. Bauteil nach Anspruch 1 oder 2, **dadurch gekennzeichnet, dass** der Verstärkungsfüllstoff Glassplitter enthält.

4. Bauteil nach Anspruch 1 oder 2, **dadurch gekennzeichnet, dass** der Verstärkungsfüllstoff Glasfasern enthält.

5. Bauteil nach Anspruch 1 oder 2, **dadurch gekennzeichnet, dass** der Verstärkungsfüllstoff Glaskügelchen enthält.

6. Herstellungsverfahren zur Herstellung eines Profils nach einem der vorhergehenden Ansprüche, **dadurch gekennzeichnet, dass** es die folgenden Schritte umfasst:
- Trocknen der Plättchen aus recyceltem Polyethylenterephtalat,
Einführen dieser Plättchen aus recyceltem Polyethylenterephtalat, der Plättchen aus recyceltem Polyethylenterephtalat hoher Dichte, des kompatibilisierenden Agens und des Verstärkungsfüllstoffes in einen Extruder, um eine pastöse Mischung zu erhalten,
und Einführen der pastösen Mischung in eine Form, die direkt am Ausgang des Extruders angeordnet ist.

7. Verfahren nach Anspruch 6, **dadurch gekennzeichnet, dass** es den weiteren Schritt umfasst, die in der Form enthaltene Mischung abzukühlen.

8. Transportpalette, **dadurch gekennzeichnet, dass** sie parallele Trägerelemente (10) mit Endabschnitten (12, 13) umfasst, die durch Verbindungsmittel an den Querbalken zur Verbindung (20) befestigt sind, die auf Winkeln (25) aufliegen, und dadurch, dass mindestens eines dieser Elemente/Balken aus einem Bauteil nach einem der Ansprüche 1 bis 5 gebildet ist.

9. Palette nach Anspruch 8, **dadurch gekennzeichnet, dass** mindestens einer der Querbalken einen C-förmigen Querschnitt mit einem oberen Schenkel (21) aufweist, auf dem die Trägerelemente befestigt sind, einen Steg (23) sowie einen unteren Schenkel (22), die beide durch mindestens eine Aussparung (24) ausgehöhlt sind, um auf jeder Seite von dieser zwei beabstandete Winkel (25) und ein einstückiges Bauteil mit dem oberen Schenkel (21) zu bilden.

10. Palette nach Anspruch 8 oder 9, **dadurch gekennzeichnet, dass** sie mindestens ein Versteifungselement (30) umfasst, das sich parallel zu den Trägerelementen (10) erstreckt im Abstand von diesen zwischen zwei gegenüberliegenden Winkeln (25), wobei das Versteifungselement die Form eines Brettes hat.

11. Palette nach Anspruch 10, **dadurch gekennzeichnet, dass** die Unterseite des Elements in Form eines Brettes mit Nuten versehen ist.

12. Palette nach Anspruch 10 oder 11, **dadurch gekennzeichnet, dass** das Versteifungselement mindestens eine Abschrägung umfasst, die an mindestens einer seiner oberen Längskanten (34) ausgebildet ist.

## Claims

1. Thermoplastic material part, **characterized in that** the material includes, by weight:
- substantially 49% to 63.5% of recycled polyethylene terephthalate,
- substantially 27% to 36% of recycled high-density polyethylene,
- substantially 4% to 6% of a compatibilizer,
- substantially 5% to 10% of a reinforcing filler.

2. Part according to claim 1, **characterized in that** the thermoplastic material includes, by weight:
- substantially 55% of polyethylene terephthalate,
- substantially 33% of high-density polyethylene,
- substantially 5% of a compatibilizer,
- substantially 7% of a reinforcing filler.

3. Part according to claim 1 or claim 2, **characterized in that** the reinforcing filler includes glass chips.

4. Part according to claim 1 or claim 2, **characterized in that** the reinforcing filler includes glass fibres.

5. Part according to claim 1 or claim 2, **characterized in that** the reinforcing filler includes glass microballs.

6. Method of manufacturing a structural section according to any one of the preceding claims, **characterized in that** it includes the steps of:
- drying recycled polyethylene terephthalate flakes,
- introducing these polyethylene terephthalate flakes, recycled high-density polyethylene flakes, the compatibilizer and the reinforcing filler into an extruder to obtain a pasty mixture, and
- introducing the pasty mixture into a mould arranged directly at the outlet of the extruder.

7. Method according to claim 6, **characterized in that** it includes the further step of cooling the mixture contained in the mould.

8. Transport pallet, **characterized in that** it includes parallel supporting elements (10) having end portions (12, 13) fixed by assembly means to connecting crossbeams (20) resting on brackets (25) and **in that** at least one of these elements/beams is constituted by a part according to any one of claims 1 to 5.

9. Pallet according to Claim 8, **characterized in that** at least one of the crossbeams has a C-shaped cross section having a top flange (21) to which the support members are fixed, a core (23) and a bottom flange (22) both recessed by at least one notch (24) to form on each side thereof two spaced brackets (25) in one piece with the top flange (21).

10. Pallet according to claim 8 or claim 9, **characterized in that** it includes at least one stiffening element (30) extending parallel to the support elements (10) at a distance therefrom between two opposite brackets (25), the stiffening element taking the form of a plank.

11. Pallet according to Claim 10, **characterized in that** the bottom surface (31) of the plank element is grooved.

12. Pallet according to Claim 10 or Claim 11, **characterized in that** the stiffening element includes at least one bevel formed on at least one of its top longitudinal edges (34).
